# EUROPÄISCHE PATENTSCHRIFT

(11) **EP 1 166 377 B1**
(45) Veröffentlichungstag und Bekanntmachung des Hinweises auf die Patenterteilung: **07.05.2003**
(21) Anmeldenummer: 00912525.3
(22) Anmeldetag: 28.02.2000
(51) Int. Cl.: H01M 4/32, H01M 4/52

(54) **MIT KOBALTHYDROXID BESCHICHTETES NICKELHYDROXID**
NICKEL HYDROXIDE COATED WITH COBALTOUS HYDROXIDE
HYDROXYDE DE NICKEL RECOUVERT D'HYDROXYDE DE COBALT

(30) Priorität: 10.03.1999 DE 19910461
(43) Veröffentlichungstag der Anmeldung: 02.01.2002
(73) Patentinhaber: H.C. Starck GmbH, 38642 Goslar (DE)
(72) Erfinder: STOLLER, Viktor, D-38667 Bad Harzburg (DE); ERB, Michael, D-38259 Salzgitter (DE); OLBRICH, Armin, D-38723 Seesen (DE); MEESE-MARKTSCHEFFEL, Juliane, D-38640 Goslar (DE)
(74) Vertreter: Peters, Frank M.
(86) Internationale Anmeldenummer: EP0001667
(87) Internationale Veröffentlichungsnummer: WO00052988

(56) Entgegenhaltungen:
- EP-A- 0 853 346
- DE-A- 19 619 235
- GB-A- 2 060 241
- US-A- 5 523 182
- DATABASE CHEMABS [Online] CHEMICAL ABSTRACTS SERVICE, COLUMBUS, OHIO, US; WATADA, SHOJI ET AL: "Nickel hydroxide cathode active mass having cobalt compound coatings for alkaline storage batteries, their preparation, and same battery cathodes" retrieved from STN Database accession no. 128:156625 CA XP002145313 -& JP 10 021901 A (YUASA BATTERY CO., LTD., JAPAN;TANAKA KAGAKU KENKYUSHO K. K.) 23. Januar 1998 (1998-01-23)
- PATENT ABSTRACTS OF JAPAN vol. 1997, no. 08, 29. August 1997 (1997-08-29) -& JP 09 102307 A (TOSHIBA BATTERY CO LTD), 15. April 1997 (1997-04-15)
- DATABASE CHEMABS [Online] CHEMICAL ABSTRACTS SERVICE, COLUMBUS, OHIO, US; HIRUMA, MASAYOSHI ET AL: "Electrode, alkaline secondary battery with high storage stability, and manufacture of the alkaline secondary battery" retrieved from STN Database accession no. 131:33893 CA XP002145314 -& JP 11 162469 A (TOSHIBA BATTERY CO., LTD., JAPAN) 18. Juni 1999 (1999-06-18)

## Beschreibung

Die vorliegende Erfindung betrifft ein oxidationsstabiles, mit Kobalthydroxid beschichtetes Nickelhydroxid sowie ein Verfahren zu dessen Herstellung, insbesondere für den Einsatz als positive Aktivmasse in wiederaufladbaren alkalischen Batterien.

Obwohl Nickelhydroxid aufgrund seiner Speicherkapazität von 1. bis (bei entsprechender Defektstruktur) theoretisch maximal 1,67 Elektronen pro Ni hervorragend für die Speicherung elektrischer Energie geeignet ist, weist dieses eine Reihe von unerwünschten Eigenschaften auf, wie geringe elektrische Leitfähigkeit, geringe Zyklenstabilität, geringe Ladefähigkeit bei hohen Temperaturen sowie die Neigung zur Quellung aufgrund der spontanen Ausbildung unterschiedlicher Kristallphasen mit unterschiedlichen Gitterabständen.

Bereits in einem sehr frühen Stadium der Entwicklung von Nickelhydroxid-Batterien war erkannt worden, daß die Eigenschaften der Batterien durch den Einsatz von mit Kobalt(II)hydroxid beschichtetem Nickelhydroxid verbessert werden können (siehe US-A 3 066 178). Allerdings hat sich der technische Einsatz von mit Kobalthydroxid beschichtetem Nickelhydroxid aufgrund der Oxidationsempfindlichkeit des Kobalt(II)-hydroxids zwischenzeitlich nicht durchgesetzt. Vielmehr ist man den Weg gegangen, bei der Herstellung der Batterie unbeschichtetes Nickelhydroxid unter Zugabe von Co-Metallpulver oder Kobaltverbindungen wie Co(II)O oder Co(OH)₂, einzusetzen, wobei sich unter Auflösung der Kobaltverbindung im Elektrolyten bei längerem Stehen (typischerweise 1 bis 3 Tage) über intermediäre Kobalt(II)hydroxokomplexe eine zwischen den Nickelhydroxidteilchen vernetzte Kobalthydroxidbeschichtung auf dem Nickelhydroxid ausbildet, die anschließend bei der ersten elektrischen Aufladung der Batterie in das eigentlich leitfähige, aber elektrochemisch inaktive Kobaltoxyhydroxid-Netzwerk umgewandelt wird. Eine zusammenfassende Darstellung der dabei bedeutsamen Mechanismen findet sich in dem Beitrag von Oshitani auf dem 3rd Symposium for Sectional New-Battery Study Group in Battery Technology Commitee of the Electrochemical Society, December 11, 1986, mit dem Titel "Development of hig-capacity nickel-cadmium battery using sintered metal fiber as substrate". Die dort dargestellten Vorstellungen bezüglich Kobaltverbindungen gelten auch für andere Substrate und Kathodenmaterialien.

Bei der Verwendung von Nickelhydroxiden, die gemäß dem Stand der Technik mit einer nicht gegenüber Luftsauerstoff oxidationsstabilen Kobalt(II)hydroxid-Schicht umhüllt sind, bildet sich im Verlauf von der Herstellung über die Lagerung bis zum eigentlichen Einsatz in der Batterie hin auf der Oberfläche der beschichteten Nickelhydroxid-Partikel eine passivierende Kobalt(II)-enthaltende Schicht, die nicht nur die Löslichkeit der Kobaltspezies zu den intermediär zu bildenden Kobalthydroxokomplexen behindert (Verringerung der Kontaktoberfläche durch nicht ausreichende Verschweißung), sondern zusätzlich eine schlechte elektrische Leitfähigkeit aufweist. Dies führt dann zwangsläufig dazu, daß große Teile der aktiven Nickelmasse elektrisch nicht zugänglich sind und als quasi totes Material nicht mehr zur Kapazität der Batterie beitragen können.

Es wurde auch bereits vorgeschlagen (Japanisches Patent 25 89 123), die leitfähige, elektrochemisch inaktive Kobaltoxyhydroxid-Schicht dadurch zu erzeugen, daß auf die Nickelhydroxid-Teilchen eine Kobalthydroxid-Schicht aufgefällt wird und die Schicht anschließend in alkalischer Lösung bei höherer Temperatur mittels Sauerstoff oxidiert wird. Zwar ist derartiges, mit Kobaltoxyhydroxid beschichtetes Nickelhydroxid oxidationsstabil; nachteilig ist allerdings die Tatsache, daß, obwohl das einzelne Teilchen in seiner äußeren Hülle eine gute leitfähige Schicht aufweist, die Ausbildung eines dreidimensionalen leitfähigen Netzwerkes zwischen den einzelnen Teilchen (Erhöhung der Kontaktoberfläche durch "Verschweißung") nur durch weiteren Zusatz von im alkalischen Elektrolyten ausreichend löslichen Kobaltverbindungen erreicht werden kann. Verzichtet man auf diesen Zusatz, so bestehen zwischen den einzelnen Teilchen nur lose Punktkontakte, und aufgrund des auftretenden Übergangswiderstandes zwischen den einzelnen Teilchen ist der Gesamtwiderstand der Elektrode erhöht.

Dagegen bleibt eine Kobalt(II)hydroxidbeschichtung im alkalischen Elektrolyten soweit löslich, daß durch dynamische Löse- und Anlagerungsvorgänge eine Vernetzung stattfindet, so daß zwischen den Teilchen Leitfähigkeitsbrücken nach Umwandlung zum Kobaltoxyhydroxid während des Initialisierungs-Ladezyklus erzeugt werden. Die beschichteten Einzelteilchen sind an den Berührungspunkten der Co(OH)₂ bzw. CoOOH-Beschichtung elektrisch leitfähig "verschweißt". Bedingung hierfür ist aber die Bereitstellung eines Nickelhydroxids mit oxidationsstabiler Kobalt(II)hydroxid-Beschichtung.

Demgemäß wurde auch bereits vorgeschlagen, Kobalt(II)-hydroxid (als Leitzusatz zu Nickelhydroxid) bzw. mit Kobalt(II)hydroxid beschichtetes Nickelhydroxid mit Antioxidantien wie D-Glucose (EP-A 744 781) oder höheren Carboxylsäuren, deren Estern, Aldehyden, Phenolen oder Vitaminen (EP-A 771 041) zu behandeln. Nachteilig hierbei ist, daß der Schutz vor Oxidation nur indirekt erzielt wird, da die Antioxidantien erst gegenüber der oxidierten Kobalt(II)-Form im Sinne einer Reduktion wirksam werden. Nachteilig ist ferner, dass das Antioxidans im Laufe der Zeit verbraucht wird, der Oxidationsschutz also zeitlich beschränkt ist. Ferner besteht das Risiko, dass unerwünschte Abbauprodukte des Antioxidants in die Batterie eingeschleppt werden.

Aus Chemical Abstracts 128:156625 (JP 10-021901 A2) ist ein Nickelhydroxid mit einer Kobalthydroxidbeschichtung bekannt, wobei die Kobalthydroxidbeschichtung weiterhin ein Dotierungselement A und ein Anion B aufweist. Die Herstellung der Kobalthydroxidbeschichtung erfolgt durch Fällung eines Kobaltsalzes, das Anionen B enthält in Gegenwart eines Salzes A-B. Dies bedingt, dass das Anion B gleichmäßig in der Kobalthydroxidbeschichtung verteilt ist. Es kommt nicht zur Ausbildung einer oberflächigen Belegung der Kobalthydroxidbeschichtung mit dem Anion.

Auch EP 853 346 A1 offenbart ein dotiertes Nickelhydroxid mit einer Kobalthydroxidbeschichtung. Die Herstellung erfolgt durch Beschichtung des dotierten Nickelhydroxids mit einer Kobalthydroxidbeschichtung und anschließendes Erhitzen in Gegenwart von Sauerstoff und einer wässrigen Alkalilösung. Die Kobalthydroxidbeschichtung enthält keine Anionen schwacher anorganischer Sauerstoffsäuren.

Es wurde nun gefunden, daß die Kobalthydroxidschicht oxidationsstabil ausgebildet werden kann, wenn das beschichtete Nickelhydroxid mit schwachen anorganischen Sauerstoffsäuren oder deren Alkalisalzen behandelt wird. Dabei wird die Oberfläche der beschichteten Teilchen mit Anionen der Säuren belegt. Geeignete Anionen sind ein oder mehrere Anionen aus der Gruppe Aluminat, Borat, Carbonat, Chromat, Manganat, Molybdat, Niobat, Phosphat, Silicat, Tantalat, Titanat, Vanadat und Wolframat, oder Oxalate.

Bevorzugt sind Borat, Phosphat, Carbonat und/oder Silicat. Insbesondere bevorzugt ist Carbonat.

"Oxidationsstabil" im Sinne der Erfindung bedeutet, daß sich der Oxidationsgrad des Kobalthydroxids bei Lagerung an Luft und bei Umgebungstemperatur (bis 40°C) nicht verändert.

Als Alkali sind Li, Na, K und/oder Pseudoalkalien wie Ammonium geeignet. Bevorzugt erfolgt die Behandlung in wässriger Lösung der Alkalisalze, insbesondere des Natriumsalzes.

Eine weniger als monomolekulare Belegung der Co(OH)₂-Oberfläche ist ausreichend, um das mit der Co(OH)₂-Beschichtung versehene Nickelhydroxid oxidationsstabil auszurüsten.

Es wurde gefunden, daß eine derartige Oberflächenbelegung die Löslichkeit der Kobalt(II)hydroxidbeschichtung in dem alkalischen Elektrolyten der Batterie nicht beeinträchtigt, so daß der oben als "Verschweißung" bezeichnete Effekt der Ausbildung eines dreidimensionalen Netzwerkes hoher Leitfähigkeit auch ohne Zugabe eines weiteren Leitzusatzes ungehindert stattfinden kann. Hierdurch ist es möglich, die Gesamt-Einsatzmenge an Kobalt minimal zu halten.

Gegenstand der Erfindung ist mit einer oxidatiionsstabilen Kobalthydroxid-Beschichtung versehenes Nickelhydroxid, wobei die Beschichtung 1 bis 200 mMol eines oder mehrerer Anionen schwacher anorganischer Sauerstoffsäuren pro Mol Kobalt(II)hydroxid aufweist und sich auf der Oberfläche eine höchstens monomolekulare Schicht dieser Anionen befindet. Vorzugsweise beträgt die Konzentration des Anions der schwachen Säure 5 bis 20 µmol/m², auf der mit Kobalthydroxid beschichteten Oberfläche.

Ganz besonders bevorzugt ist eine Oberflächenbelegung von 10 bis 18 µmol/m².

Bezogen auf die Menge der Kobalthydroxidbeschichtung beträgt die oberflächliche Anionenkonzentration vorzugsweise 10 bis 50 mMol pro Mol Kobalt(II)hydroxid.

Das erfindungsgemäße Nickelhydroxidpulver ist vorzugsweise frei von Antioxidantien oder deren organischen Abbauprodukten.

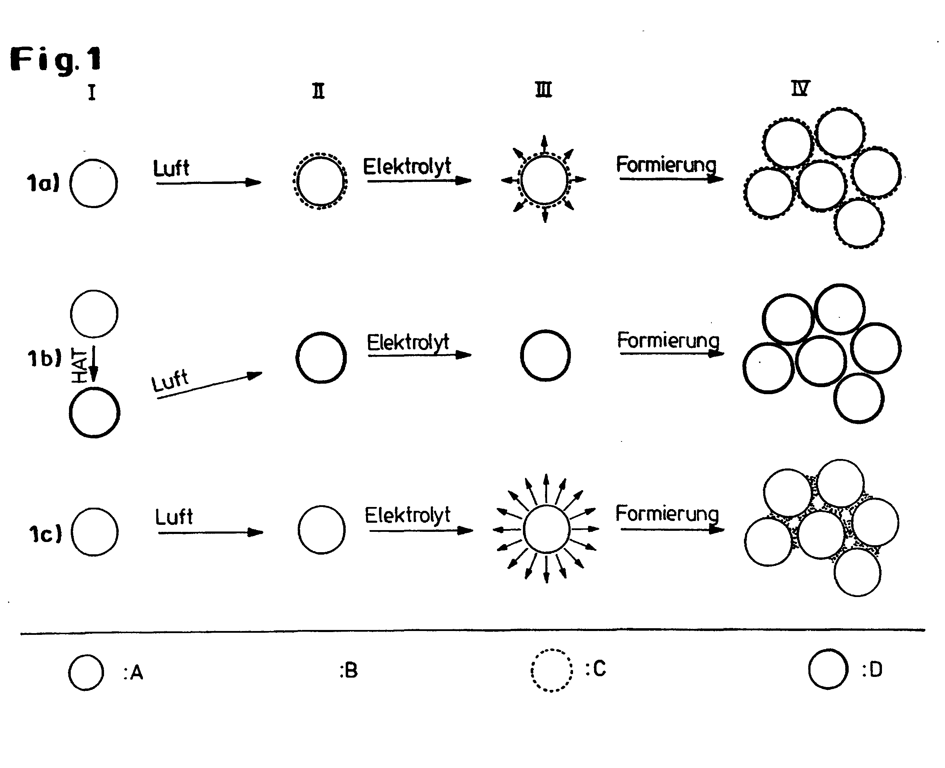

Fig. 1 erläutert die Erfindung im Vergleich zum Stand der Technik.

Die Kreise A stellen schematisch ein Nickelhydroxidteilchen dar, die graue Struktur B eine Co(OH)₂-Beschichtung, der strichlierte Kreis C eine partielle Oxidation der Co(OH)₂-Beschichtung und die dunkle Struktur D eine CoOOH-Beschichtung.

Fig. 1a) erläutert den Stand der Technik, nach dem ein mit nicht oxidationsstabilem Co(OH)₂ beschichtetes Nickelhydroxid (I) durch den Kontakt zur Umgebungsluft oberflächlich partiell oxidiert wird (II). Hierdurch ist die Hydroxokomplex-Bildung im Elektrolyten (III) behindert. Dadurch kann sich auch nach Formierung nur ein partielles Leitfähigkeitsnetzwerk ausbilden (IV).

Fig. 1b) erläutert die Erzeugung einer CoOOH-Beschichtung durch Konversion der Co(OH)₂-Beschichtung durch alkalische Oxidation bei erhöhter Temperatur (I). Die Leitfähigkeit der Aktivmasse in der Batterie ist durch lose Punktkontakte bestimmt (IV).

Fig. 1c) zeigt das erfindungsgemäß mit eine oxidationsstabilen Co(OH)₂-Beschichtung versehene Nickelhydroxid (I, II), das im Elektrolyten über hydroxokomplexe löslich bleibt (III) und daher bei der Formierung (erste Lade- und Entladezyklen) ein Co(OOH)-Netzwerk ausbildet.

Das erfindungsgemäß einzusetzende Nickelhydroxid kann auf beliebige Weise hergestellt werden.

Bekannte Verfahren zur Herstellung von Nickelhydroxid sind die chemische Fällung aus wäßrigen Nickel-Salzlösungen mittels Alkalilaugen, die elektrolytische Auflösung von Nickelanoden in einem wässrigen salzhaltigen Elektrolyten, die Druckoxidation von Nickelmetall-Pulver, die komplexierende Auflösung von Nickelpulver in einer Ammoniaklösung und anschließender Fällung durch Destillation sowie durch oxidierende Hydrolyse und anschließende Reduktion von Alkalinickelaten. Bevorzugt sind Verfahren der chemischen Fällung oder der elektrolytischen Auflösung von Nickelanoden. Bevorzugt wird ein sphärisches Nickelhydroxid eingesetzt, das nach einem der bekannten Verfahren des Standes der Technik hergestellt ist.

Die nach einem der bekannten Verfahren hergestellten Nickelhydroxid-Basisteilchen werden zunächst in einem ersten Schritt in wässriger Suspension unter Zugabe von Kobalt(II)salzen und Alkalilauge und/oder Ammoniak unter geeigneten Bedingungen mit Kobalt(II)hydroxid beschichtet. Bevorzugte Bedingungen zur Erzielung einer gleichmäßigen Kobalt(II)hydroxid-Beschichtung sind: Prozeßführung conti, semibatch oder batch; Verweilzeit 0,2 bis 12 h; Temperatur 0 bis 120°C, bevorzugt 30 bis 60°C und besonders bevorzugt 30 bis 40°C; Druck 0,1 bis 2,5 bar, bevorzugt 0,5 bis 1,2 bar; pH-Wert bei 25°C 8,5 bis 13, bevorzugt 9,5 bis 11,5 und besonders bevorzugt 10,2 bis 10,8; Feststoffkonzentration 10 bis 700 g/l, bevorzugt 100 bis 400 g/l; NH₃-Gehalt 0 bis 15 g/l, bevorzugt 0 bis 10 g/l, besonders bevorzugt 2 bis 5 g/l; Alkali/Kobaltverhältnis 75 bis 150 %, bevorzugt 80 bis 95 % der Stöchiometrie; gegebenenfalls Filtration, Waschen mit Wasser und/oder verdünnter Alkalilauge, bevorzugt Natronlauge-Lösung mit einem pH-Wert von 11 bis 12. Die Beschichtung mit Kobalt(II)hydroxid kann ohne Schutzgas oder die Zugabe von Antioxidantien erfolgen.

Zur Stabilisierung der Kobalt(II)hydroxid-Beschichtung durch oberflächliche Inertisierung wird anschließend in einem zweiten Schritt die originäre Fällungssuspension des Beschichtungsprozesses oder bevorzugt das bereits von der Mutterlauge abgetrennte, in Wasser resuspendierte mit Kobalt(II)hydroxid beschichtete Nickelhydroxid mit den weiter oben aufgeführten schwachen Säuren bzw. deren wässrigen Alkali- oder Alkalihydrogensalzen behandelt. Die Stabilisierungsbehandlung kann auch nach Filtration von der Mutterlauge der originären Fällungssuspension des Beschichtungsprozesses direkt durch Behandlung des ungewaschenen oder gewaschenen Filterkuchens erfolgen. Der Temperaturbereich der Stabilisierungsbehandlung liegt bei 0 bis 100°C, bevorzugt 20 bis 60°C und besonders bevorzugt 40 bis 50°C. Die Dauer der Behandlung kann 0,2 bis 12 Stunden betragen.

Als besonders vorteilhaft hat sich herausgestellt, die Stabilisierungsbehandlung durch Carbonatisierung der Oberfläche des mit Kobalt(II)hydroxid beschichteten Nickelhydroxids durchzuführen. Dabei erfolgt die Carbonatisierung vorzugsweise durch Zusatz von Alkalicarbonat- und/oder Alkalihydrogencarbonat-Lösungen bei Konzentrationen von 0,01 mol/l bis zum Löslichkeitsmaximum, bevorzugt 0,03 bis 1 mol/l, wobei die Menge an Alkalicarbonat- und/oder Alkalihydrogencarbonat-Lösung die 0,1- bis 10-fache Masse beträgt bezogen auf den Feststoffgehalt der Suspension, die das mit Kobalt(II)hydroxid beschichtete Nickelhydroxid enthält. Die Carbonatisierung läuft auch dann im Sinne der Erfindung ab, wenn die Carbonatisierung durch Zugabe von Kohlendioxid, z.B. Einleitung als Gas, erfolgt.

Eine besonders bevorzugte Ausführungsform der Erfindung besteht darin, den noch feuchten Filterkuchen aus der Kobalthydroxidbeschichtung oder der anschließenden Waschung in Kohlendioxid oder Kohlendioxid-haltiger Luft bei CO₂-Partialdrücken von 0,01 bis 2 bar, vorzugsweise 0,01 bis 1 bar, zu behandeln. Die Behandlung kann gleichzeitig mit der Trocknung der Pulver erfolgen, beispielsweise in kontinuierlich betriebenen Sprühtrocknern oder Spin-Flash-Trocknern.

Das nach abgeschlossener Stabilisierungsbehandlung mit einer stabilisierten Kobalt(II)hydroxid-Schicht überzogene Nickelhydroxid kann vor dem abschließenden Trocknungsschritt optional auch noch gewaschen werden. Die Trocknung selbst muß nicht unter Luftausschluß (Vakuum oder Schutzgas) durchgeführt werden, sondern es kann kostensparend an Luft getrocknet werden. Als Trocknungsaggregate können alle üblichen Trocknertypen verwendet werden.

Obwohl pulverförmiges Nickelhydroxid erfindungsgemäß bevorzugt ist, ist die Erfindung nicht auf pulverförmiges Nickelhydroxid beschränkt. Erfindungsgemäß ist es in analoger Weise möglich, zunächst Nickelhydroxid auf einem Substrat, vorzugsweise einem Nickelnetz, Nickelfaservlies oder einer Nickelfolie, zu fällen, anschließend mit Kobalthydroxid zu beschichten und das beschichtete Substrat anschließend in die Behandlungslösung zu tauchen.

Bevorzugte Basis-Nickelhydroxide weisen mittlere Teilchengrößen (D50-Wert nach Mastersizer) von 0,5 bis 500 µm, besonders bevorzugt 2 bis 30 µm auf. Die spezifische Oberfläche kann vorteilhaft 2 bis 70 m²/g nach BET betragen.

Das Basis-Nickelhydroxid kann ferner eines oder mehrere der an sich bekannten Dotierelemente aus der Gruppe Magnesium, Calcium, Strontium, Scandium, Yttrium, Lanthan, Lanthanoide, Titan, Zirkon, Chrom, Molybdän, Wolfram, Mangan, Eisen, Kobalt, Kupfer, Cadmium, Zink, Bor, Aluminium, Gallium, Indium, Silicium, Phosphor, Arsen, Antimon und Wismuth in Mengen von insgesamt 0,2 bis 25 Gew.-% aufweisen. Bevorzugte Nickelhydroxide weisen Dotierungen mit 0,5 bis 5 Gew.-% Zink und 0,5 bis 5 Gew.-% Kobalt in einer Gesamtmenge von 3 bis 8 Gew.-% auf.

Die Kobalthydroxidbeschichtung kann ebenfalls in an sich bekannter Weise Dotierungselemente aus der obengenannten Gruppe enthalten.

Die Erfindung wird durch das nachfolgende Beispiel näher erläutert:

### Beispiel

In einen auf 37°C temperierten 17 Liter Rührreaktor werden parallel kontinuierlich 348,5 g/h einer CoCl₂-Lösung (7,0 % Co), 297,5 g/h einer 10 %igen NaOH-Lösung, 180 ml/h einer 100 g/l NH₃-Lösung und 3000 ml/h einer Ni(OH)₂-Suspension (150 g/l mit Co und Zn dotiertes sphärisches Ni(OH)₂, 80 g/l NaCl, 3,5 g/l Na₂SO₄) dosiert. Hierbei stellt sich im Gleichgewichtszustand ein pH-Wert (25°C) von 10,5 und ein NH₃-Gehalt (Kjeldahl) von ca. 3,5 g/l ein. Nach 24stündiger Vorlaufzeit wird der Reaktorablauf (ca. 3750 ml/h) für weitere 72 Stunden in 24 h-Intervallen gesammelt, chargenweise filtriert und mit jeweils 23 kg temperierter 0,2 g/l NaOH-Lösung (45°C) gewaschen. Der Filterrückstand wird dann mit 46 kg 1,0 mol/l Na₂CO₃-Lösung (45°C) behandelt und abschließend mit 46 kg VE-Wasser (45°C) gewaschen. Die Trocknung erfolgt bei 50°C im Vakuum. Die Produktausbeute beträgt 11,7 kg pro 24 h-Charge.

Tabelle 1 gibt Analysenwerte des unbeschichteten Basis-Nickelhydroxids wieder. Tabelle 2 gibt Analysenwerte des mit Kobalthydroxid beschichteten Nickelhydroxid mit oxidationsstabilisierender Behandlung unmittelbar nach Herstellung und nach 6-monatiger Lagerung an Luft wieder.

**Tabelle 1**

| Ni(OH)₂-Basismaterial, unbeschichtet | | | | | | | |
|---|---|---|---|---|---|---|---|
| **Ni** | **Co**_{**ges.**} | **Co(III)** | **Zn** | **Cl** | **Na** | **SO**_{**4**} | **C** |
| (%) | (%) | (%) | (%) | (ppm) | (ppm) | (ppm) | (ppm) |
| 57,17 | 1,44 | 0,5 | 3,65 | 360 | 31 | 80 | 1100 |
| **KD** | **MS** | **KG** | **BET** | | | | |
| (g/cm³) | D₅₀ (µm) | (A) | (m²/g) | | | | |
| 2,0 | 4,5 | 70 | 19,84 | | | | |

**Tabelle 2**

| Erfindungsgemäßes Ni(OH)₂-Basismaterial, beschichtet mit Co(OH)₂ und CO₃ | | | | | | | |
|---|---|---|---|---|---|---|---|
| **Ni** | **Co**_{**ges.**} | **Co(III)** | **Zn** | **Cl** | **Na** | **SO**_{**4**} | **C** |
| (%) | (%) | (%) | (%) | (ppm) | (ppm) | (ppm) | (ppm) |
| 52,92 | 6,44 | 0,7 | 3,36 | 420 | 35 | 140 | 1400 |
| **KD** | **MS** | **KG** | **BET** | | **Co(III)** nach 6 Monaten Lagerung an Luft | | |
| (g/cm³) | D₅₀ (µm) | (A) | (m²/g) | | (%) | | |
| 2,0 | 4,5 | 70 | 19,84 | | 0,7 | | |
| KD = Klopfdichte; MS = Teilchengröße bestimmt nach Mastersizer; | | | | | | | |
| KG = Röntgenanalytisch bestimmte Kristallitgröße; | | | | | | | |
| BET = spezifische Oberfläche nach BET, %-Werte = Gew.-%. | | | | | | | |

Das gemäß dem Beispiel hergestellte erfindungsgemäß beschichtete Nickelhydroxid-Material wird nach 6-monatiger Lagerung an Luft im Halbzellentest ohne jegliche Zugabe eines Leitzusatzes bei der Elektrodenherstellung vermessen und erreicht ab dem 3. (Lade- und Entlade-) Zyklus, 99 % der Ni-Ausnutzung bezogen auf den Einelektronenschritt.

Dabei wird eine klassische Dreielektrodenanordnung gewählt, die aus einer Hg/HgO-Referenzelektrode, einer Nickelblech-Gegenelektrode und der die Nickelhydroxid-Aktivmasse enthaltenden Arbeitselektrode besteht. Die elektrochemische Messung erfolgt galvanostatisch, d.h. es wird ein konstanter Lade- bzw. Entladestrom zwischen Arbeits- und Gegenelektrode vorgegeben. Gemessen wird das Potential der Arbeitselektrode gegen das Potential derr Referenzelektrode. Die Zyklisierung erfolgt durch 15-stündiges Laden mit I₁₀ (I₁₀ bezeichnet den Ladestrom, der in 10 Stunden 100 % der theoretischen Ladekapazität liefert) und Entladen mit I₁₀ bis 0 V vs Hg/HgO. Als Elektrolyt wird eine wässrige Kalilauge-Lösung verwendet. Zur Präparation der Arbeitselektrode wird das erfindungsgemäße Nickelhydroxid-Material als Schaumelektrode präpariert und anschließend vermessen.

## Patentansprüche

1. Nickelhydroxid mit oxidationsstabiler Kobalthydroxidbeschichtung, wobei die Beschichtung 1 bis 200 mMol eines oder mehrerer Anionen schwacher anorganischer Sauerstoffsäuren pro Mol Kobalt(II)hydroxid aufweist und sich auf der Oberfläche eine höchstens monomolekulare Schicht dieser Anionen befindet..

2. Nickelhydroxid nach Anspruch 1, wobei das Anion CO₃ ist.

3. Nickelhydroxid nach einem der Ansprüche 1 bis 2 in Form vom Pulver mit einer mittleren Teilchengröße (D50-Wert nach Mastersizer) von 0,5 bis 500 µm.

4. Nickelhydroxid nach einem der Ansprüche 1 bis 3 in Form der Beschichtung eines Substrates.

5. Nickelhydroxid nach einem der Ansprüche 1 bis 4, enthaltend ein oder mehrere der Dotierungselemente aus der Gruppe Mg, Ca, Sr, Sc, Y, La, Lanthanoide, Ti, Zr, Cr, Mo, W, Mn, Fe, Co, Cu, Zn, Cd, B, Al, Ga, In, Si, P, As, Sb, Bi in Mengen von insgesamt 0,2 bis 25 Gew.-%.

6. Nickelhydroxid nach einem der Ansprüche 1 bis 5, enthaltend Wassermoleküle auf Zwischengitterplätzen in einer Menge von bis zu 10 Gew.-%.

7. Verfahren zur Herstellung von Nickelhydroxid nach einem der Ansprüche 1 bis 6, **dadurch gekennzeichnet, dass** gegebenenfalls dotiertes, mit einer Kobalthydroxidbeschichtung versehenes Nickelhydroxid mit einer schwachen anorganischen Sauerstoffsäure aus der Gruppe Aluminat, Borat, Carbonat, Chromat, Manganat, Molybdat, Niobat, Phosphat, Silicat, Tantalat, Vanadat und Wolframat oder Oxalat oder deren Alkalisalzen behandelt oder durch Zugabe von Kohlendioxid corbonatisiert wird.

8. Verfahren nach Anspruch 7, **dadurch gekennzeichnet, dass** die Behandlung in einer wäßrigen Lösung von Alkali- und/oder Alkalihydrogencarbonat durchgeführt wird.

9. Verfahren nach einem der Ansprüche 7 bis 8, **dadurch gekennzeichnet, dass** die Behandlung in der originären Fällungssuspension des Beschichtungsprozesses oder nach vorheriger Abtrennung von der Mutterlauge der originären Fällungssuspension und anschließende Resuspendierung in Wasser erfolgt.

10. Verfahren nach einem der Ansprüche 7 bis 9, **dadurch gekennzeichnet, dass** die Behandlung nach Filtration von der Mutterlauge der originären Fällungssuspension des Beschichtungsprozesses direkt durch Behandlung des ungewaschenen oder gewaschenen Filterkuchens erfolgt.

11. Verfahren nach Anspruch 8, **dadurch gekennzeichnet, dass** die Behandlung durch Zusatz von Alkalicarbonat- und/oder Alkalihydrogencarbonat-Lösungen bei Konzentrationen von 0,01 mol/l bis zum Löslichkeitsmaximum, bevorzugt 0,03 - 0,1 mol/l erfolgt.

12. Verfahren nach Anspruch 11, **dadurch gekennzeichnet, dass** die Menge an Alkalicarbonat- und/oder Alkalihydrogencarbonat-Lösung die 0,1-10fache Masse, bezogen auf den Feststoffgehalt der Suspension, enthaltend das mit Kobalt(II)hyroxid beschichtete Nickelhydroxid, beträgt.

13. Verfahren nach einem der Ansprüche 7 bis 12, **dadurch gekennzeichnet, dass** die Behandlung bei einer Temperatur von 0-100°C, bevorzugt von 20-60°C und besonders bevorzugt von 40-50°C,erfolgt.

14. Verfahren nach einem der Ansprüche 7 bis 13, **dadurch gekennzeichnet, dass** das mit stabilisiertem Kobalt(II)hydroxid beschichtete Nickelhydroxid vor dem abschließenden Trocknungsschritt gewaschen wird.

15. Verfahren nach einem der Ansprüche 7 bis 14, **dadurch gekennzeichnet, dass** die Trocknung des mit stabilisiertem Kobalt(II)hydroxid beschichteten Nickelhydroxids ohne Luftausschluss erfolgt.

16. Verfahren nach Anspruch 7, **dadurch gekennzeichnet, dass** die Carbonatisierung durch Behandlung des feuchten Filterkuchens, enthaltend das mit Kobalt(II)hydroxid beschichtete Nickelhydroxid, in Kohlendioxid oder kohlendioxidhaltiger Luft bei CO₂-Partialdrücken von 0,01 bis 2 bar, bevorzugt 0,01 bis 0,1 bar, erfolgt, vorzugsweise bei gleichzeitiger Trocknung in kontinuierlich betriebenen Sprühtrocknern oder Spin-Flash-Trocknern.

17. Verwendung des mit stabilisiertem Kobalt(II)hydroxid beschichteten dotierten oder undotierten Nickelhydroxids gemäß einem der Ansprüche 1 bis 16, als Elektrodenmaterial in Sekundärbatterien.

## Claims

1. Nickel hydroxide having an oxidation-stable cobalt hydroxide coating, wherein the coating contains from 1 to 200 mmol of one or more anions of weak inorganic oxo acids per mol of cobalt(II) hydroxide and an at most monomolecular layer of these anions is located on the surface.

2. Nickel hydroxide according to Claim 1, wherein the anion is CO₃.

3. Nickel hydroxide according to Claim 1 or 2 in the form of powder having a mean particle size (D50 determined by means of a Mastersizer) of from 0.5 to 500 µm.

4. Nickel hydroxide according to any of Claims 1 to 3 in the form of a coating on a substrate.

5. Nickel hydroxide according to any of Claims 1 to 4 containing one or more doping elements selected from the group consisting of Mg, Ca, Sr, Sc, Y, La, lanthanides, Ti, Zr, Cr, Mo, W, Mn, Fe, Co, Cu, Zn, Cd, B, Al, Ga, In, Si, P, As, Sb, Bi in a total amount of from 0.2 to 25% by weight.

6. Nickel hydroxide according to any of Claims 1 to 5 containing water molecules in interstitial lattice sites in an amount of up to 10% by weight.

7. Process for preparing nickel hydroxide according to any of Claims 1 to 6, **characterized in that** doped or undoped nickel hydroxide provided with a cobalt hydroxide coating is treated with a weak inorganic oxo acid selected from the group consisting of aluminate, borate, carbonate, chromate, manganate, molybdate, niobate, phosphate, silicate, tantalate, vanadate and tungstate or oxalate or their alkali metal salts or carbonated by addition of carbon dioxide.

8. Process according to Claim 7, **characterized in that** the treatment is carried out in an aqueous solution of alkali metal carbonate and/or alkali metal hydrogen carbonate.

9. Process according to Claim 7 or 8, **characterized in that** the treatment is carried out in the original precipitation suspension of the coating process or after prior separation from the mother liquor of the original precipitation suspension and subsequent resuspension in water.

10. Process according to any of Claims 7 to 9, **characterized in that** the treatment is carried out directly by treatment of the unwashed or washed filter cake after filtration from the mother liquor of the original precipitation suspension of the coating process.

11. Process according to Claim 8, **characterized in that** the treatment is carried out by addition of alkali metal carbonate solution and/or alkali metal hydrogen carbonate solution at concentrations of from 0.01 mol/l to the maximum solubility, preferably 0.03 - 0.1 mol/l.

12. Process according to Claim 11, **characterized in that** the amount of alkali metal carbonate solution and/or alkali metal hydrogen carbonate solution is 0.1-10 times the mass of solids present in the suspension containing the nickel hydroxide coated with cobalt(II) hydroxide.

13. Process according to any of Claims 7 to 12, **characterized in that** the treatment is carried out at a temperature of 0-100°C, preferably 20-60°C and particularly preferably 40-50°C.

14. Process according to any of Claims 7 to 13, **characterized in that** the nickel hydroxide coated with stabilised cobalt(II) hydroxide is washed prior to the final drying step.

15. Process according to any of Claims 7 to 14, **characterized in that** the drying of the nickel hydroxide coated with stabilised cobalt(II) hydroxide is carried out without exclusion of air.

16. Process according to Claim 7, **characterized in that** the carbonation is carried out by treatment of the moist filter cake comprising the nickel hydroxide coated with cobalt(II) hydroxide in carbon dioxide or air containing carbon dioxide at CO₂ partial pressures of from 0.01 to 2 bar, preferably from 0.01 to 0.1 bar, preferably with simultaneous drying in continuously operated spray dryers or spin flash dryers.

17. The use of the doped or undoped nickel hydroxide coated with stabilised cobalt(II) hydroxide according to any of Claims 1 to 16 as electrode material in secondary batteries.

## Revendications

1. Hydroxyde de nickel portant un revêtement d'hydroxyde de cobalt stable à l'oxydation, le revêtement contenant 1 à 200 mmol d'un ou plusieurs anions d'acides minéraux oxygénés faibles par mole d'hydroxyde de cobalt(II) et se trouvant à la surface d'une couche au maximum monomoléculaire de ces anions.

2. Hydroxyde de nickel selon la revendication 1, pour lequel l'anion est CO₃.

3. Hydroxyde de nickel selon l'une des revendications 1 à 2, à l'état de poudre à une dimension de particule moyenne (valeur D50 au dispositif Mastersizer) de 0,5 à 500 µm.

4. Hydroxyde de nickel selon l'une des revendications 1 à 3, à l'état de revêtement sur un support.

5. Hydroxyde de nickel selon l'une des revendications 1 à 4, contenant un ou plusieurs des éléments dopants du groupe consistant en Mg, Ca, Sr, Sc, Y, La, les lanthanoïdes, Ti, Zr, Cr, Mo, W, Mn, Fe, Co, Cu, Zn, Cd, B, Al, Ga, In, Si, P, As, Sb, Bi en quantité totale de 0,2 à 25 % en poids.

6. Hydroxyde de nickel selon l'une des revendications 1 à 5, contenant des molécules d'eau sur des emplacements interréticulaires en quantité allant jusqu'à 10 % en poids.

7. Procédé pour la préparation de l'hydroxyde de nickel selon l'une des revendications 1 à 6, **caractérisé en ce que** l'on traite un hydroxyde de nickel éventuellement dopé, portant un revêtement d'hydroxyde de cobalt, par un acide minéral oxygéné faible du groupe consistant en les aluminates, les borates, les carbonates les chromates, les manganates, les molybdates, les niobates, les phosphates, les silicates, les tantalates, les vanadates et les tungstates ou les oxalates ou leurs sels alcalins ou bien on le carbonate par addition de dioxyde de carbone.

8. Procédé selon la revendication 7, **caractérisé en ce que** le traitement est réalisé dans une solution aqueuse d'un carbonate et/ou bicarbonate alcalin.

9. Procédé selon l'une des revendications 7 à 8, **caractérisé en ce que** le traitement est réalisé dans la suspension initiale de précipitation de l'opération de revêtement ou après séparation des liqueurs mères de la suspension initiale de précipitation et remise en suspension dans l'eau.

10. Procédé selon l'une des revendications 7 à 9, **caractérisé en ce que** le traitement est réalisé après filtration des liqueurs mères de la suspension initiale de précipitation de l'opération de revêtement, directement par traitement du gâteau de filtration lavé ou non lavé.

11. Procédé selon la revendication 8, **caractérisé en ce que** le traitement est réalisé par addition de solutions de carbonates alcalins et/ou de bicarbonates alcalins à des concentrations allant de 0,01 mol/l jusqu'à la solubilité maximale, de préférence de 0,03 à 0,1 mol/l.

12. Procédé selon la revendication 11, **caractérisé en ce que** la quantité de la solution de carbonate alcalin et/ou de bicarbonate alcalin représente de 0,1 à 10 fois le poids des matières solides de la suspension contenant l'hydroxyde de nickel revêtu d'hydroxyde de cobalt(II).

13. Procédé selon l'une des revendications 7 à 12, **caractérisé en ce que** le traitement est réalisé à une température de 0 à 100°C, de préférence de 20 à 60°C et plus spécialement de 40 à 50°C.

14. Procédé selon l'une des revendications 7 à 13, **caractérisé en ce que** l'hydroxyde de nickel revêtu d'hydroxyde de cobalt(II) stabilisé est lavé avant l'opération finale de séchage.

15. Procédé selon l'une des revendications 7 à 14, **caractérisé en ce que** le séchage de l'hydroxyde de nickel revêtu d'hydroxyde de cobalt(II) stabilisé est réalisé sans exclusion de l'air.

16. Procédé selon la revendication 7, **caractérisé en ce que** la carbonatation est réalisée par traitement du gâteau de filtration humide contenant l'hydroxyde de nickel revêtu de l'hydroxyde de cobalt(II) dans le dioxyde de carbone ou dans de l'air contenant du dioxyde de carbone à des pressions partielles de CO₂ de 0,01 à 2 bar, de préférence de 0,01 à 0,1 bar, et de préférence avec séchage simultané dans des séchoirs-atomiseurs ou des séchoirs du type Spin-Flash opérant en continu.

17. Utilisation de l'hydroxyde de nickel dopé ou non, revêtu d'hydroxyde de cobalt(II) stabilisé selon l'une des revendications 1 à 16 en tant que matériau d'électrode dans des piles secondaires.
